# EUROPÄISCHE PATENTANMELDUNG

(11) **EP 0 919 779 A2**
(43) Veröffentlichungstag der Anmeldung: **02.06.1999**
(21) Anmeldenummer: 98890351.4
(22) Anmeldetag: 30.11.1998
(51) Int. Cl.: F24J 2/50

(54) **Wabenlamelle für eine transparente Wärmedämmung**

(30) Priorität: 01.12.1997 AT 2032/97
(71) Anmelder: Joanneum Research Forschungsgesellschaft mbH, 8700 Leoben (AT)
(72) Erfinder: Lang, Reinhold W. Prof. Dr., 8010 Graz (AT)
(74) Vertreter: Hübscher, Heiner, Dipl.-Ing.

(57) **Zusammenfassung**

Eine Wabenlamelle (1) für eine transparente Värmedämmung besteht aus zwei durch eine Wellung wabenbildenden transparenten Folienbahnen (101, 102). Um eine hinsichtlich der Värmedämmeigenschaflen und hinsichtlich der Strahlungsdurchlässigkeit optimierbare Wabenlamelle zu schaffen, sind eine flache Folienbahn, die Trägerfolie (101), und eine in Bahnlängsrichtung gewellte Folienbahn, die Wabenfolie (102), einander zugeordnet und miteinander im Bereich der trägerfolienseitig vorragenden Wellenscheitel (103) miteinander verbunden.

## Beschreibung

Die Erfindung bezieht sich auf eine Wabenlamelle für eine transparente Wärmedämmung aus wenigstens zwei durch eine Wellung wabenbildenden transparenten Folienbahnen.

Bei einer transparenten Wärmedämmung können auf Grund der Verwendung transparenter Wärmedämmaterialien auftretende Wärmeverluste durch Solarenergie aufgehoben und darüber hinaus sogar Wärmegewinne für Heizzwecke, insbesondere für eine Gebäudeheizung genutzt werden. Die Wärmedämmaterialien für solche transparente Wärmedämmungen müssen daher im Gegensatz zu den üblichen opaken Dämmstoffen neben der hohen Wärmedämmwirkung eine hohe Durchlässigkeit für Solarstrahlung aufweisen, was eine Optimierung der eingesetzten Dämmaterialien hinsichtlich der energetisch bedeutenden Eigenschaften Wärmeleitung, -konvektion und -strahlung und Strahlungsdurchlässigkeit verlangt. Es sind daher nicht nur geeignete Werkstoffe zu wählen, sondern auch entsprechende Strukturen für die Dämmaterialien unter Beachtung der vorhandenen Hohlräume, Materialwandstärken, Volumenanteile der Materialien, Transparenzeigenschaften, Oberflächenqualitäten und Bearbeitungsgüte u. dgl. vorzugeben.

Die bekannten Dämmaterialien bestehen meist aus extrudierten Wabenkörpern, die sich aus einer Vielzahl im Querschnitt runder oder polygonaler Röhrchen zusammensetzen, welche Wabenkörper extrusionsbedingt im Vergleich zu Folien eine schlechte Oberflächenqualität und damit ein die Durchlässigkeit beeinträchtigendes Streu- und Reflexionsverhalten mit sich bringen. Ein Beschneiden der Wabenkörper verlangt das Schneiden der vorhandenen kammerstruktur und ergibt ungünstige optische Eigen-schaften in den Schnittbereichen. Außerdem ist auf Grund der Extrusionstechnik die Herstellung von dünnen Wabenwänden nur mit großem apparativem Aufwand möglich, die Wabenkörper sind extrusionsbedingt in Aufbau und Struktur kaum variabel und sie können quer zur Extrusionsrichtung lediglich in recht beschränkten Dimensionen hergestellt werden, wodurch die Fertigung und auch die Verlegung größerer Flächeneinheiten solcher Wabenkörper erschwert werden.

Zur Wärmedämmung von Dachfenstern u. dgl. gibt es auch schon Wabenlamellen aus transparenten und gewellten Folienbahnen, die paarweise mit sich kreuzendem Wellenverlauf verbunden sind. Es entsteht zwar ein transparentes Wärmedämmaterial, doch ergeben die sich kreuzenden Wellen ineinanderübergehende Waben und ungünstige Reflexionsverhältnisse, so daß sich diese Wabenlamellen wegen der schlechten Dämm- und Transparenzeigenschaften nicht für den Einsatz bei transparenten Wärmedämmungen eignen. Dazu kommt noch, daß diese Wabenlamellen durch die Wellenstruktur biegesteif sind und dennoch nur geringe Festigkeitseigenschaften besitzen und sich praktisch nur als Isolierplatten einsetzen lassen.

Der Erfindung liegt daher die Aufgabe zugrunde, eine Wabenlamelle der eingangs geschilderten Art zu schaffen, die rationell herstellbar ist, sich vielfältig einsetzen und auf unterschiedliche Weise verlegen läßt und vor allem hinsichtlich der Wärmedämmung und der Strahlungsdurchlässigkeit höchsten Anforderungen genügt.

Die Erfindung löst diese Aufgabe dadurch, daß eine flache Folienbahn, die Trägerfolie, und eine in Bahnlängsrichtung gewellte Folienbahn, die Wabenfolie, einander zugeordnet und miteinander im Bereich der trägerfolienseitig vorragenden Wellenscheitel verbunden sind. Folienbahnen lassen sich mit gewünschter Oberflächenqualität und Dicke wirtschaftlich herstellen und mit einwandfreien Schnittkanten beschneiden, wobei flache wie in Längsrichtung gewellte Folienbahnen endlos gefertigt und miteinander einfach durch Kleben, Schweißen oder Kaschieren verbunden werden können, wobei die Verbindungsstellen über die ganze Bahnbreite durchgehen oder auch nur punktuell oder bereichsweise gesetzt sein können. Trotz der rationellen Herstellung lassen sich die entstehenden Wabenlamellen in ihrer Dimensionierung und Gestaltung innerhalb weiter Grenzen frei gestalten, was die Anpassung an die unterschiedlichsten Gegebenheiten ermöglicht. Die Wabenlamelle selbst ist auf Grund der Kombination von flacher Trägerfolie und gewellter Wabenfolie in Längsrichtung flexibel und wickelbar, in Querrichtung jedoch ausreichend stabil und knickfest, wobei die einzelnen durch die Wellung entstehenden Waben gegenseitig abgegrenzt sind und bei einem stirnseitigen Abschluß zu isolierenden Luftpolstern führen und die Wärmedämmung beeinträchtigende Strömungserscheinungen verhindern. Die einerseits glatten und anderseits gewellten Wabenlamellen können lageweise übereinandergereiht werden, ohne ein Ineinanderrutschen der Wellungen befürchten zu müssen, und lassen sich zu verschiedensten Dämmkörpern aufbauen.

Es gibt zwar bereits Lächtbaukerne oder Verpackungsmaterialien aus ähnlichen Wäbenstrukturen, doch sind diese bekannten Strukturen aus imprägnierten, papierartigen Materialien hergestellt, was einen Vergleich mit Wabenlamellen für transparente Wärmedämmungen ausschließt.

Besonders günstige Verhältnisse für eine transparente Wärmedämmung ergeben sich dadurch, daß die Folienbahnen eine Dicke (d) von maximal 100 um, vorzugsweise von 25 bis 75 µm, aufweisen, die Wabenfolie eine Wellenhöhe (h) von ca. 10 mm, vorzugsweise 2 bis 7 mm, aufweist, die Breite (b) der Folienbahnen ca. 100 mm beträgt und daß der Volumenanteil der Träger- und Wabenfolie am Gesamtvolumen der Lamelle maximal 6 Vol. % beträgt. Dabei spielt es kaum eine Rolle, welche Wellenform die Wabenfolie besitzt, es können sinusförmige, kammförmige, zickzackförmige Wellenformen od. dgl. sein, wesentlich ist nur die Wellenhöhe und der Volumenanteil der Folienbahnen. Unter Einhaltung solcher Grenzwerte werden ein Wärmedurchlaßkoeffizient λ von 0,7 bis 1,1 W/m²K für die Wärmedämmwirkung und ein Gesamtenergiedurchlaßgrad g von 0,5 bis 0,7 für die Durchlässigkeit von Solarstrahlung erreicht, wenn mit zwei Abdeckscheiben aus 4 mm dickem eisenarmen Glas und einer Folienbreite von 100 mm gemessen wird.

Grundsätzlich können für die Folienherstellung alle transparenten und entsprechend temperaturgeeigneten Polymere herangezogen werden, wobei sich aus den amorphen Polymeren für den Niedrigtemperaturbereich CTA (Cellulosetriacetat), CA (Celluloseacetat), PC (Polycarbonat), PMMA (Polymethymetmethacrylat) und für den Hochtemperaturbereich PSU (Polysulfon), PC-HT (Polycarbonat), PES (Polyethersulfon) und PAS (Polyarylsulfon) eignen und von den teilkristallinen Polymeren für den Niedrigtemperaturbereich PET (Polyethylenterephtalat), PP (Polypropylen), COC (Cycloolefinische Copo) sowie für den Hochtemperaturbereich PFA (Perfluor-Alkoxialkan), FEP (Tetrafluorethylen-Hexafluorpropylen), ETFE (Ethylen-Tretrafluorethylen) und PEEK (Polyetheretherketon). Der Niedrigtemperaturbereich umfaßt vor allem die transparente Wärmedämmung für Hausfassaden zur Raumheizung, der Hochtemperaturbereich hingegen zielt beispielsweise auf Prozeßkollektoren u. dgl. ab.

Trägerfolie und Wabenfolie können durchaus auch aus unterschiedlichen Werkstoffen bestehen, wodurch ein maßgeschneidertes Anwendungsprofil bzw. auch ein maßgeschneidertes Eigenschaftsprofil erreichbar sind.

Nach einer besonders vorteilhaften Ausgestaltung der Erfindung sind Trägerfolie und Wabenfolie gegeneinander breitseits versetzt angeordnet und/oder weisen unterschiedliche Breite auf, so daß zumindest eine der Folien an einer Seite einen überstehenden Randstreifen bildet. Dadurch läßt sich beispielsweise bei einem Anstehen am zugeordneten Absorber der Wärmetransport über die Folien wesentlich reduzieren und außerdem können die Randstreifen zusätzliche funktionelle Aufgaben übernehmen, wodurch die Eigenschaften, aber auch das Aussehen der Wärmedämmung beeinflußt werden können.

Sind die vorstehenden Randstreifen beschichtet und/oder strukturiert, können sie zur architektonischen Gestaltung der Wärmedämmfläche in optischer Hinsicht beitragen und bieten die Möglichkeit zur Beeinflussung des Energietransportes durch Reflexion u. dgl., wobei unter Beschichten alle bekannten Verfahren, wie Bedampfen, Farbgebungen, Kaschierungen u. dgl., verstanden wird.

Ist der gegenüber der Wabenfolie vorstehende Randstreifen der Trägerfolie filmscharnierartig abwinkelbar, werden diese Randstreifen durch die Wabenfolie statisch abgestützt und lassen sich daher in Längsrichtung schwenkverstellen, wodurch eine gezielte Beeinflussung des Reflexions- und Streuverhaltens und damit des Energieeintrages und der Abstrahlverluste der Wärmedämmung möglich ist. Solche beweglichen Randstreifen lassen sich dann auch als integrierte Beschattungseinrichtung nützen, wodurch Überhitzungen während der Zeiten hoher Energieeinstrahlung bzw. Abstrahlverluste u. dgl. unterbunden werden können. Die Schwenkverstellung der Randstreifen erfordert auf Grund der kleinen Verstellwege und der geringen Verstellkräfte keinen besonderen Konstruktionsaufwand und läßt sich beispielsweise durch Lochungen der Randstreifen und geeignete Schnur- oder Hebelsysteme od. dgl. durchführen. Ein solches Beschattungssystem kann die bisher üblichen zusätzlichen Rollosysteme oder thermotrope Schichtgläser u. dgl. auf rationelle Weise ersetzen.

Eine weitere Möglichkeit der Anpassung ergibt sich, wenn mit der Trägerfolie an der wabenfolienabgewandten Seite eine zusätzliche, in Bahnlängs- oder -querrichtung gewellte Folienbahn, eine Zusatzwabenfolie, verbunden ist, womit sich sowohl die Dämmwie die Durchlaßeigenschaften und Festigkeitseigenschaften verändern lassen.

Die Wabenlamelle kann auf verschiedenste Weise eingesetzt werden, wobei beispielsweise in Stücke abgelängte Wabenlamellen zu einem Dämmkörper übereinandergeschichtet sind, was im wesentlichen meist prismatische Wabenkörper ergibt, die durch Schweißen, Kleben, Heften, aber auch einfach durch ein Zusammenbinden oder Umreifen od. dgl. zusammenhalten und als Einheit versetzt werden können.

Um dabei die Form des Dämmkörpers an unterschiedliche Gegebenheiten anzupassen, können die Wabenlamellenstücke gegeneinander breitseits versetzt geschichtet sein, wodurch sich die Neigung der Vorder- und Hinterseite des Dämmkörpers bezüglich der Wabenlängsrichtung weitgehend frei wählen läßt.

Eine andere Möglichkeit des Dämmkörperaufbaues besteht darin, daß die Wabenlamellenbahn zu einem Dämmkörper gewickelt ist, so daß ein Wickelballen entsteht, der sich ohne Schwierigkeiten prismatisch verformen und z. B. zur Halterung in Rahmenelemente einsetzen läßt.

In der Zeichnung ist der Erfindungsgegenstand schematisch veranschaulicht, und zwar zeigen
- Fig. 1 bis 5: fünf verschiedene Ausführungsbeispiele einer erfindungsgemäßen Wabenlamelle jeweils im Schaubild und die
- Fig. 6 bis 11: sechs Ausführungsbeispiele eines aus einer erfindungsgemäßen Wabenlamelle hergestellten Dämmkörpers ebenfalls jeweils im Schaubild.

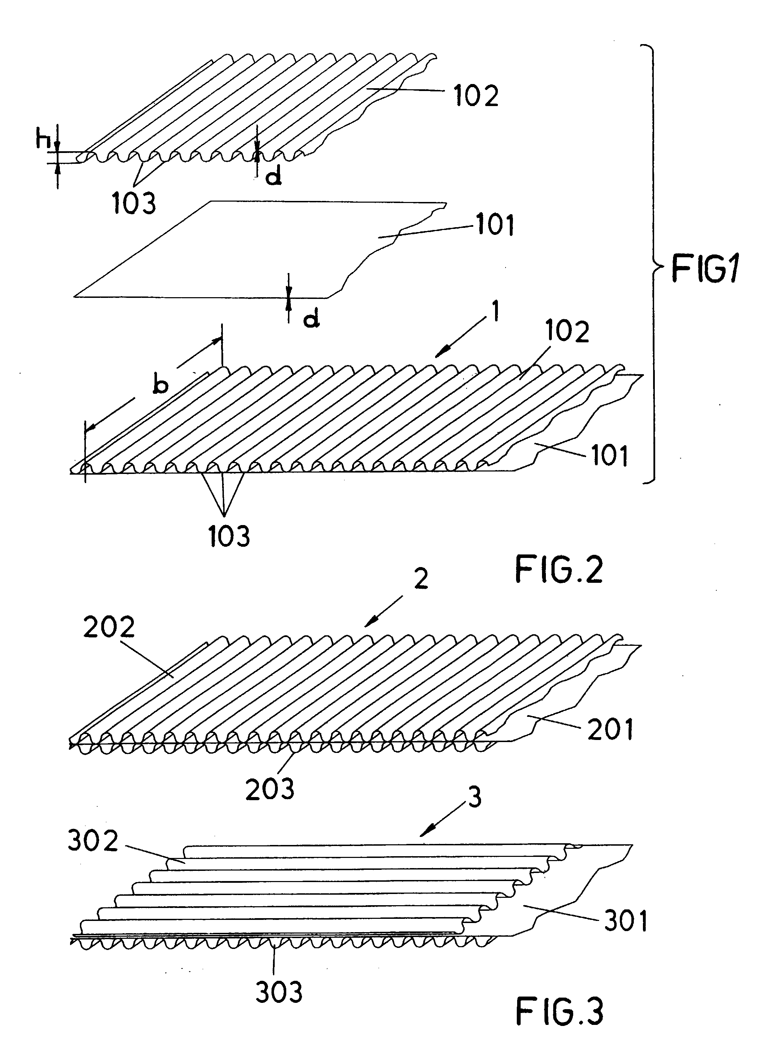

Gemäß Fig. 1 besteht eine erfindungsgemäße Wabenlamelle 1 aus zwei transparenten Folienbahnen, einer flachen Folienbahn, die Trägerfolie 101, und einer in Bahnlängsrichtung gewellten Folienbahn, die Wabenfolie 102, die miteinander im Bereich der trägerfolienseitig vorragenden Wellenscheitel 103 verbunden sind. Diese Verbindung kann durch Kleben, Schweißen oder Kaschieren erfolgen und sich jeweils linienförmig über die gesamte Scheitellänge oder nur bereichsweise oder punktförmige entlang der Scheitellinie erstrecken. Die Folienbahnen bestehen aus einem Polymer und weisen eine Dicke d von max. 100 µm auf, wobei die Wellenhöhe h der Wabenfolie 102 max. 10 mm und die Breite b der Folienbahnen max. ca. 100 mm betragen. Eine solche Wabenlamelle bietet optimierte Eigenschaften hinsichtlich Wärmedämmung und Strahlungsdurchlässigkeit und ist daher bestens für den Einsatz bei transparenten Wärmedämmungen geeignet. Dabei ist die eigentliche Wellenform der Wabenfolie 102 für diese Optimierung von untergeordneter Bedeutung, sie kann daher nach anderen Gesichtspunkten, z. B. nach mechanischen Eigenschaften gewählt werden, so lange der Volumenanteil der Materialien, also der Träger- und Wabenfolie 101, 102 am Gesamtvolumen der Wabenlamelle 1 max. 6 Vol. % ausmacht.

Gemäß dem Ausführungsbeispiel nach Fig. 2 besteht die Wabenlamelle 2 aus einer flachen Trägerfolie 201 und einer in Bahnlängsrichtung gewellten Folienbahn 202, wobei an der wabenfolienabgewandten Seite der Trägerfolie 201 eine zusätzliche, in Bahnlängsrichtung gewellte Zusatzfolie 203 befestigt ist, wodurch eine höhere Steifigkeit entsteht, aber die Wabenfolie 2 wickelbar bleibt.

Gemäß dem Ausführungsbeispiel nach Fig. 3 umfaßt die Wabenlamelle 3 zusätzlich zur Trägerfolie 301 und zur in Bahnlängsrichtung gewellten Wabenfolie 302 eine in Bahnquerrichtung gewellte Zusatzfolie 303, so daß die Wellungen der Wabenfolie und der Zusatzfolie zueinander senkrecht verlaufen und eine biegesteife und stapelbare Wabenlamelle 3 entsteht.

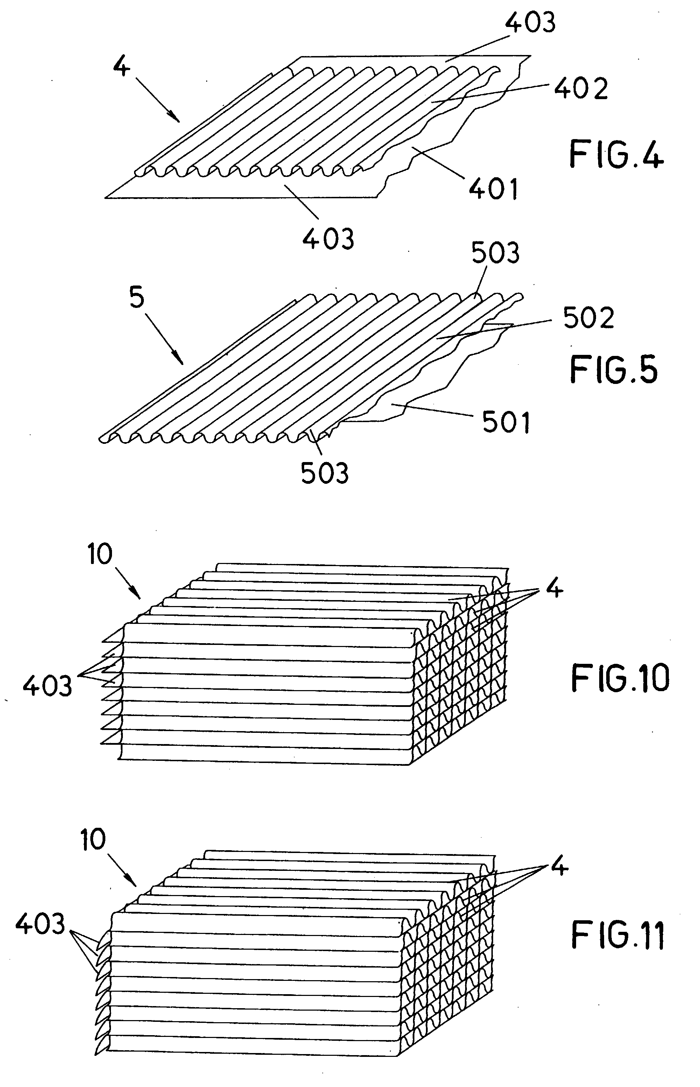

Wie in Fig. 4 und 5 angedeutet, ist es möglich, die Wabenlamellen 4, 5 aus unterschiedlich breiten Trägerfolien 401, 501 und Wabenfolien 402, 502 zusammenzusetzen, so daß einseitig oder, wie dargestellt, beidseitig der Wabenlamelle 4, 5 ein vorstehender Randstreifen 403, 503 verbleibt, welche Randstreifen speziell beschichtet, bedampft, kaschiert oder strukturiert sein können und sowohl zur architektonischen Gestaltung dienen als auch funktionelle Aufgaben, wie Beeinflussung des Energietransportes, übernehmen können, wobei die Randstreifen 403 der flachen Trägerfolie auch entlang der Wabenfolieränder abwinkelbar sind.

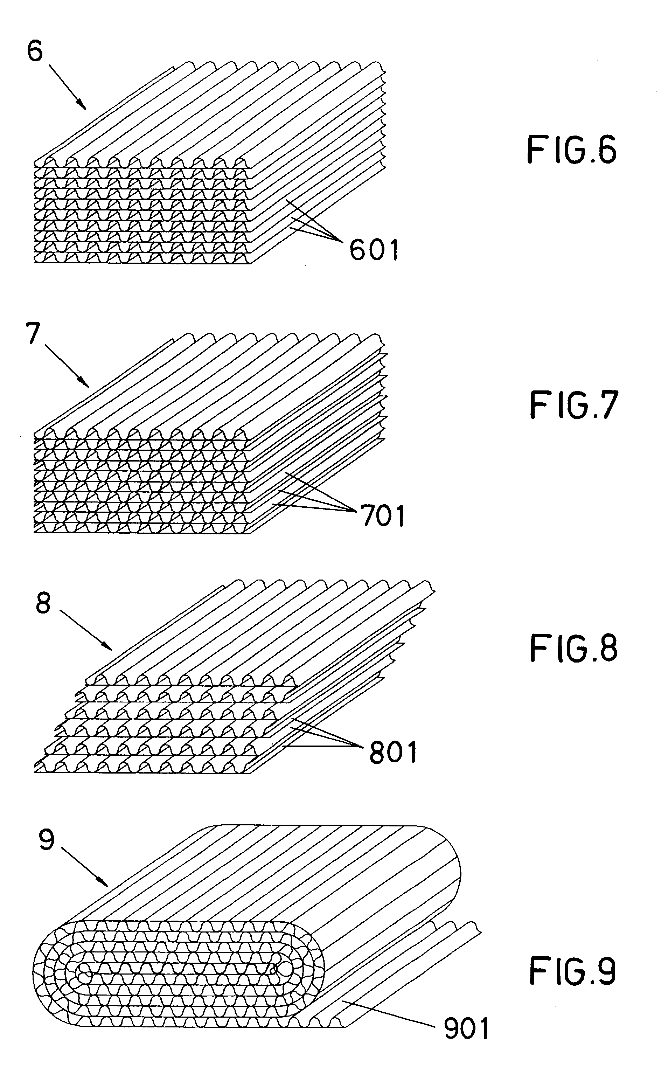

Wie in den Fig. 6 bis 9 angedeutet, lassen sich aus den Wabenlamellen Dämmkörper 6, 7, 8, 9 fertigen, die bei einer transparenten Wärmedämmung, sei es bei Gebäudefassaden oder bei Prozeßkollektoren, einsetzbar sind. Gemäß Fig. 6 ist der Dämmkörper 6 aus einzelnen plattenförmig abgelängten Stücken 601 der Wabenlamellen aufgebaut, die senkrecht übereinandergeschichtet werden, gemäß Fig. 7 ist der Dämmkörper 7 ebenfalls aus senkrecht übereinandergeschichteten Stücken 701 von Wabenlamellen aufgeschichtet, wobei allerdings die einzelnen Stücke 701 um eine Wellenlänge gegeneinander versetzt sind, und gemäß Fig. 8 ist der Dämmkörper 8 aus übereinandergeschichteten Wabenlamellenstücken 801 zusammengesetzt, die gegeneinander breitseits versetzt angeordnet sind und eine im wesentlichen schräge Vorder- und Rückseite bilden. Der Dämmkörper 9 gemäß Fig. 9 besteht hingegen aus einem Ballen, der durch entsprechendes Wickeln einer Wabenlamellenbahn 901 entsteht.

In Fig. 10 und 11 ist ein Dämmkörper 10 veranschaulicht, der aus einzelnen Stücken der Wabenlamelle 4 aufgeschichtet ist, welche Wabenlamellen 4 an der Vorderseite überstehende Randstreifen 403 aufweisen, wobei in Fig. 10 diese Randstreifen 403 in der Ebene der Trägerfolien 401 verlaufen und einfallende Strahlen in den Dämmkörper hineinreflektieren, in Fig. 11 hingegen abwärts abgewinkelt sind und damit durch ein auswärts Reflektieren der Strahlen eine Verschattung bilden. Es ist daher möglich, Dämmkörper mit integrierter Verschattungseinrichtung herzustellen, wobei sich die Randstreifen 403 zur Betätigung der Verschattungseinrichtung ohne Schwierigkeiten mittels Schnurzügen od. dgl. schwenkverstellen lassen.

## Patentansprüche

1. Wabenlamelle (1) für eine transparente Wärmedämmung aus wenigstens zwei durch eine Wellung wabenbildenden transparenten Folienbahnen (101, 102), dadurch gekennzeichnet, daß eine flache Folienbahn, die Trägerfolie (101, 201, 301, 401, 501), und eine in Bahnlängsrichtung gewellte Folienbahn, die Wabenfolie (102, 202, 302, 402, 502), einander zugeordnet und miteinander im Bereich der trägerfolienseitig vorragenden Wellenscheitel (103) verbunden sind.

2. Wabenlamelle nach Anspruch 1, dadurch gekennzeichnet, daß die Fdienbahnen eine Dicke (d) von maximal 100 µm, vorzugsweise von 25 bis 75 µm, aufweisen.

3. Wabenlamelle nach Anspruch 1 oder 2, dadurch gekennzeichnet, daß die Wabenfolie (102) eine Wellenhöhe (h) von ca. 10 mm, vorzugsweise 2 bis 7 mm, aufweist.

4. Wabenlamelle nach einem der Ansprüche 1 bis 3, dadurch gekennzeichnet, daß die Breite (b) der Folienbahnen ca. 100 mm beträgt.

5. Wabenlamelle nach einem der Ansprüche 1 bis 4, dadurch gekennzeichnet, daß der Volumenanteil der Träger- und Wabenfolie am Gesamtvolumen der Lamelle maximal 6 Vol. % beträgt.

6. Wabenlamelle nach einem der Ansprüche 1 bis 5, dadurch gekennzeichnet, daß die Folienbahnen aus amorphen Polymeren, wie CTA, CA, PC, PMMA, PSU, PC-HT, PES oder PAS, oder teilkristallinen Pdymeren, wie PET, PP, COC, PFA, FEP, ETFE oder PEEK, bestehen.

7. Wabenlamelle nach einem der Ansprüche 1 bis 6, dadurch gekennzeichnet, daß die Trägerfolie und die Wabenfolie aus unterschiedlichen Werkstoffen bestehen.

8. Wabenlamelle nach einem der Ansprüche 1 bis 7, dadurch gekennzeichnet, daß Trägerfolie (401, 501) und Wabenfolie (402, 502) gegeneinander breitseits versetzt angeordnet sind und/oder unterschiedliche Breite aufweisen.

9. Wabenlamelle nach Anspruch 8, dadurch gekennzeichnet, daß die vorstehenden Randstreifen (403, 503) beschichtet und/oder strukturiert sind.

10. Wabenlamelle nach Anspruch 8 oder 9, dadurch gekennzeichnet, daß der gegenüber der Wabenfolie (402) vorstehende Randstreifen (403) der Trägerfolie (401) filmscharnierartig abwinkelbar ist.

11. Wabenlamelle nach einem der Ansprüche 1 bis 10, dadurch gekennzeichnet, daß mit der Trägerfolie (201, 301) an der wabenfolienabgewandten Seite eine zusätzliche, in Bahnlängs- oder -querrichtung gewellte Folienbahn, eine Zusatzwabenfolie (203, 303), verbunden ist.

12. Wabenlamelle nach einem der Ansprüche 1 bis 11, dadurch gekennzeichnet, daß in Stücke abgelängte Wabenlamellen (601, 701, 801) zu einem Dämmkörper (6, 7, 8) übereinandergeschichtet sind.

13. Wabenlamelle nach Anspruch 12, dadurch gekennzeichnet, daß die Wabenlamellenstücke (801) gegeneinander breitseits versetzt geschichtet sind.

14. Wabenlamelle nach einem der Ansprüche 1 bis 11, dadurch gekennzeichnet, daß die Wabenlamellenbahn (901) zu einem Dämmkörper (9) gewickelt ist.
